Europäisches Patentamt

European Patent Office

Office européen des brevets

(19)

(11) Veröffentlichungsnummer : **0 152 904**
**B1**

(12) # EUROPÄISCHE PATENTSCHRIFT

(45) Veröffentlichungstag der Patentschrift :
24.01.90

(51) Int. Cl.⁵ : **G 01 N 27/90**

(21) Anmeldenummer : 85101525.5

(22) Anmeldetag : 13.02.85

(54) Verfahren und Durchführungsanordnung zum Prüfen von und/oder zum Messen an elektrisch leitfähigen Prüfgegenstände.

(30) Priorität : 17.02.84 SE 8400861

(43) Veröffentlichungstag der Anmeldung :
28.08.85 Patentblatt 85/35 .

(45) Bekanntmachung des Hinweises auf die Patenterteilung : 24.01.90 Patentblatt 90/04

(84) Benannte Vertragsstaaten :
DE FR GB

(56) Entgegenhaltungen :
US–A– 3 159 784
US–A– 3 197 693
US–A– 4 061 968
MESSEN & PRÜFEN/AUTOMATIK, Nr. 1/2, Januar/Februar 1982, Seiten 55-59, Bad Woerlshofen, DE; A. OTT: "Dimensionierung optimaler Sondenkreise für die zerstörungsfreie Werkstoffprüfung mit Wirbelstrom unter Verwendung des Buschbeck-Meinke-Diagramms"

(73) Patentinhaber : TÖRNBLOMS KVALITETSKONTROLL AB
Vikhus Rytterne
S-725 92 Västeras (SE)

(72) Erfinder : Törnblom, Bengt
Vikhus Rytterne
S-725 92 Västeras (SE)

(74) Vertreter : Boecker, Joachim, Dr.-Ing.
Rathenauplatz 2-8
D-6000 Frankfurt a.M. 1 (DE)

EP 0 152 904 B1

## Beschreibung

Die vorliegende Erfindung betrifft ein Verfahren und eine Durchführungsanordnung gemäß dem Oberbegriff des Anspruches 1.

Ein besonderes Problem beispielsweise bei der Feststellung von Rissen in Prüfgegenständen besteht in dem störenden Einfluß der umgebenden Oberflächenstruktur des Prüfgegenstandes auf den Meßwert, wodurch dieser in vielen Fällen drastisch verschlechtert werden kann. Beispielsweise bei der Feststellung von Rissen in warmen stranggegossenen Rohlingen, sogenannten slabs, sind auf der Oberfläche des Rohlings Oszillationsverformungen (OSCM) vorhanden, die sich für die Messung sehr störend auswirken und die Meßmöglichkeiten begrenzen, obgleich diese Verformungen für das Endprodukt verhältnismäßig ungefährlich sind.

Diese unerwünschte Beeinflussung durch beispielsweise Oszillationsverformungen kann mit Hilfe bekannter Mehrfrequenzmethoden, die auf sogenannten « Kleinsignaltheorien » basieren, d. h. Verfahren, welche die Ableitung einer Funktion in einem bestimmten Punkt verwenden, um eine veränderliche Größe zu verstärken oder zu dämpfen, wegen der sehr begrenzten Liftoff-Arbeitsbereiche bei diesen Verfahren nicht wirkungsvoll unterdrückt werden.

Zu den bekannten Anordnungen und Verfahren mit diesen Begrenzungen gehören zum Beispiel das im Buch von Hugo Libby « Introduction to Electromagnetic Nondestructive Test Methods », 1979 (Robert Krieger Publishing Company, Huntington, New York) beschriebene Verfahren sowie das in der US-A-4 303 885 beschriebene Verfahren.

In der schwedischen Patentanmeldung 8400698-0 wird eine rein elektronische Lösung des Kleinsignalproblems beschrieben.

Der Erfindung liegt die Aufgabe zugrunde, ein Verfahren und eine Durchführungsanordnung der eingangs genannten Art zu entwickeln, bei welchen die vorstehend genannten und hiermit zusammenhängenden Probleme beseitigt sind.

Zur Lösung dieser Aufgabe wird ein Verfahren gemäß dem Oberbegriff des Anspruches 1 vorgeschlagen, welches erfindungsgemäß die im kennzeichnenden Teil des Anspruches 1 genannten Merkmale hat.

Eine Anordnung zur Durchführung des Verfahrens ist durch die im Anspruch 3 genannten Merkmale gekennzeichnet.

Vorteilhafte Ausgestaltungen der Erfindung sind in den weiteren Ansprüchen 3 bis 8 genannt.

Da die Erfindung in erster Linie sich mit der Ausgestaltung des Gebers befaßt, kann sie als eine Optimierung des Gebers betrachtet werden, während die in der SE-Anmeldung 8400698-0 beschriebene dynamische Transformation in erster Linie sich mit der Optimierung der die Gebersignale verarbeitenden elektronischen Anordnung befaßt. Durch die gemeinsame Verwendung dieser beiden Optimierungen schafft man eine ausgezeichnete Voraussetzung dafür, die unerwünschten Beeinflussungen des Meßergebnisses durch verhältnismäßig ungefährliche Veränderungen und Erscheinungen auf dem Prüfgegenstand, wie zum Beispiel Oszillationsverformungen oder LO-Variationen, zu unterdrücken.

In der SE-Anmeldung 8302738-3 wird erläutert, warum bei der Messung mit Trägerfrequenzen H und L gearbeitet wird, die sich sehr stark-voneinander unterscheiden, zum Beispiel H/L > 10. Dies hat zur Folge, daß der Unterschied zwischen den Eindringtiefen $\Delta DJ$ für die im Prüfgegenstand induzierten Wirbelströme unterschiedlicher Frequenz größer wird. Die Folge hiervon ist, daß auch die unerwünschten Folgen dieser unterschiedlichen Eindringtiefe ebenfalls vergrößert werden, nämlich beispielsweise die Verschlechterung des Signal/Störverhältnisses S/N für das Meßergebnis.

Anhand der Figuren soll sowohl das Verfahren wie die Anordnung gemäß der Erfindung näher beschrieben werden, wobei zu beachten ist, daß die Darstellungen in den Figuren nicht maßstabsgerecht und naturgetreu sind. Es zeigen

Figur 1 die Anordnung des Gebers zum Prüfgegenstand und die Verteilung der induzierten Ströme in Abhängigkeit der Eindringtiefe in den Prüfgegenstand,

Figur 2 die Verhältnisse bei einer sogenannten Oszillationsverformung,

Figur 3 einen Geber mit einer Spule und einem partiell zu dieser parallel geschalteten Blindwiderstand,

Figur 4 einen Geber mit getrennten Erregerspulen und Meßspulen.

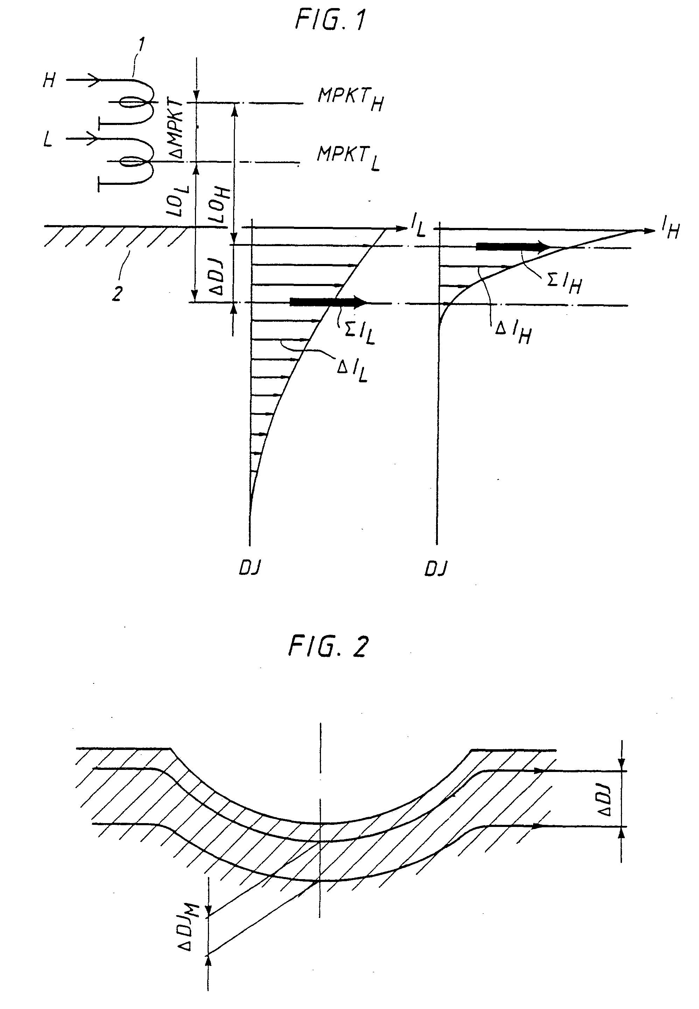

Der in Figur 1 als Beispiel dargestellte Geber 1 hat zwei separate Spulen, die mit Strömen unterschiedlicher Frequenz (H bzw. L) gespeist werden. Der Geber befindet sich in einem gewissen Abstand von dem Prüfgegenstand 2. Der senkrecht zur Oberfläche des Prüfgegenstandes gemessene Abstand zwischen den effektiven Mittelpunkten MPKT der beiden Spulen ist mit $\Delta MPKT$ bezeichnet und die Differenz zwischen den beiden Eindringtiefen der im Prüfgegenstand induzierten Summen-ströme $\Sigma I$ ist mit $\Delta DJ$ bezeichnet.

Dies stimmt mit dem in der SE-Anmeldung 8400698-0 beschriebenen Verfahren überein mit Ausnahme des Merkmals, daß im vorliegenden Fall der Geber verschiedene Spulen für die Ströme unterschiedlicher Frequenz hat.

Anhand des in Figur 1 gezeigten Beispieles soll die Erfindung kurz beschrieben werden :

Der Geber ist so ausgeführt und wird so gespeist, daß $\Delta DJ$ gleich $\Delta MPKT$ ist. Dadurch wird $LO_H$ gleich $LO_L$, wobei die LO-Abhängigkeit bei den Frequenzen H und L im allgemeinen gleichartigen Funktionen folgt (eventuell durch Berechnung usw.). Dadurch kann die LO-Abhängigkeit, gemessen zwischen den Frequenzen, unterdrückt werden.

Man kann also direkt mit dem Geber, also ohne hochentwickelte Elektronik, unerwünschte Signale, wie sie beispielsweise durch den LO-Abstand oder durch Oszillationsverformungen am Prüfling verursacht werden, im Ausgangssignal des Gebers unterdrücken.

Im folgenden werden einige für die Erfindung wichtige Begriffe verdeutlicht :

Ein « Geber » ist ein einen magnetischen Fluß erfassendes und in der Regel auch erzeugendes Gerät, daß aus einer Windung oder Spule oder einer Anordnung von Windungen oder Spulen oder ähnlichen Elementen besteht. Der Geber kann auch aus einer stromgespeisten Primärspule und einer das magnetische Feld messende Sekundärspule usw. bestehen. In Fällen, in denen der magnetische Fluß durch ein anderes Gerät erzeugt wird, braucht der Geber nur aus einem den magnetischen Fluß erfassenden Teil zu bestehen.

Bei dem « Prüfgegenstand » kann es sich zum Beispiel handeln um einen Rohling, ein Blech, ein Rohr, einen Draht, ein Profil usw.

Unter « Veränderungen » werden zum Beispiel Fehler, Risse, Poren, Abblätterungen, Löcher usw. verstanden, jedoch auch Maßänderungen und andere Arten von Veränderungen.

Unter « Konstante » wird im allgemeinen eine Größe verstanden, die innerhalb eines angemessenen Arbeitsbereichs konstant ist.

Unter « Frequenz » wird meistens die Frequenz (Trägerfrequenz) des Stromes oder die Frequenz der Stromkomponente verstanden, mit welcher der Geber gespeist wird. Wenn von einem Strom bestimmter Frequenz gesprochen wird, so schließt das nicht aus, daß dieser Strom auch zusätzlich in kleineren Anteilen Ströme anderer Frequenzen enthält, wie dies auch bei jedem nicht exakt sinusförmigen Wechselstrom der Fall ist. Ein solcher « Frequenzkomplex » gilt als Strom bestimmter Frequenz im Sinne dieser Beschreibung.

Mit « Lift-Off » oder « LO » wird der senkrecht zur Oberfläche des Prüfgegenstandes gemessene Abstand zwischen dem effektiven Mittelpunkt MPKT der von einem Strom bestimmter Frequenz durchflossenen Spule und dem zu diesem Strom gehörenden Summenstrom $\Sigma I$ im Prüfgegenstand bezeichnet. Dieser Abstand kann eine Funktion der Frequenz des betreffenden Stromes sein ; er kann jedoch auch konstant sein, wie aus der vorliegenden Erfindung hervorgeht.

Mit « H » ist eine hohe Frequenz oder ein Signal gemeint, das von einer hohen Frequenz herrührt oder von dieser dominiert wird.

Mit « L » ist eine niedrige Frequenz oder ein Signal gemeint, das von einer niedrigen Frequenz herrührt oder von dieser dominiert wird.

Mit « Summenstrom » $\Sigma I$ ist beispielsweise ein fiktiver Strom in Prüfgegenstand gemeint, welcher hinsichtlich Leistung oder Wirkung der Summe der Teilströme im Prüfgegenstand entspricht. Die Summenströme sind gewöhnlich unterschiedlich für unterschiedliche Frequenzen. Die Eindringtiefe eines Summenstromes im Prüfgegenstand ist Abhängig von der Frequenz.

Unter dem « effektiven Mittelpunkt » MPKT der Geberspule kann man sich eine Ebene vorstellen, in der man sich die Spule als eine fiktive Spule räumlich konzentriert vorstellen kann, die dieselbe Wirkung hinsichtlich der magnetischen Kopplung zwischen Geber und Prüfgegenstand hervorruft wie die reale Spule mit ihrer dreidimensionalen Erstreckung. Dieser effektive Mittelpunkt ist meistens unterschiedlich für verschiedene Frequenzen. Es ist daher wichtig zu beachten, daß der effektive Mittelpunkt der Geberspule eine zweidimensionale Erstreckung (Ebene) haben kann. Der effektive Mittelpunkt kann ferner sowohl eine Funktion des primären wie des sekundären Kreises im Geber sein, beispielsweise dadurch, daß der sekundäre Kreis niederohmig belastet wird, wodurch der Sekundärstrom ebenfalls den Wirbelstrom beeinflußt.

Mit « Differenz » ist zum Beispiel die Differenz oder der Quotient aus zwei Funktionen oder Signalen gemeint.

Die Erfindung kann als Verfahren und Anordnung zum Prüfen von und/oder zum Messen an elektrisch leitenden Prüfgegenständen zur Feststellung von Veränderungen in oder an dem Prüfgegenstand verstanden werden. Die Erfindung umfaßt die Verwendung zumindest eines Gebers, zum Beispiel einer Spule oder dergleichen, der mit Signalen gespeist wird, zum Beispiel Strom von unterschiedlichem Frequenzinhalt, zum Beispiel mehreren überlagerten Strömen oder Spannungen von unterschiedlicher Frequenz. Die von diesen Strömen erregten magnetischen Felder induzieren im Prüfgegenstand Ströme, durch welche der Geber vom Prüfgegenstand her durch die induktive Kopplung zwischen Geber und Prüfgegenstand beeinflußt wird. Die hierdurch vom Geber im Zusammenwirken mit dem Prüfgegenstand gelieferten Signale können zur Erfassung von Veränderungen im Prüfgegenstand oder an der Oberfläche des Prüfgegenstandes verwendet werden, zum Beispiel durch ein Vektortransformationsverfahren oder dergl. Der Geber wird dabei so gestaltet und gespeist, daß eine vollständige oder teilweise Unterdrückung zumindest eines der unerwünschten Signale erzielt wird, die direkt oder indirekt durch den Unterschied zwischen den Eindringtiefen der Ströme verursacht werden, die in dem Prüfgegenstand durch Induktion erzeugt werden. Diese Gestaltung und/oder Speisung hat zum Ziel, dem Geber verschiedene Eigenschaften bei unterschiedlichen Frequenzen zu geben, so daß zum Beispiel der effektive Mittelpunkt MPKT zumindest einer Geberspule in irgendeiner Hinsicht für zumindest zwei verschiedene Frequenzen oder Frequenzkomplexe verschieden ist. Dies kann etwas vereinfacht so beschrieben werden, daß der Geber scheinbar bei verschiedenen Frequenzen verschiedene Stellungen und Konturen hinsichtlich der Kopplung zwischen Geber und Prüfgegenstand einnimmt.

Dadurch, daß man die Differenz $\Delta$MPKT zwischen zumindest zwei effektiven Mittelpunkten der Geberspulen genauso groß macht, wie den Unterschied $\Delta$DJ zwischen den Eindringtiefen der Summenströme (Siehe Figur 1), kann LO$_H$ gleich LO$_L$

gemacht werden, was verschiedene Vorteile hat. Ein Vorteil besteht darin, daß die LO-Abhängigkeit des Ausgangssignals des Gebers dadurch wirksam unterdrückt werden kann, daß die LO-Abhängigkeit bei den vorliegenden Frequenzen im wesentlichen ähnliche Verläufe hat (eventuell ist eine Berechnung erforderlich), wodurch die LO-Abhängigkeit kompensiert werden kann, indem man beispielsweise von verschiedenen Frequenzen erzeugte Signale kombiniert.

In Figur 1 besteht der Geber 1 aus zwei Spulen, die mit den Strömen H bzw. L gespeist werden. Der effektive Mittelpunkt für die mit dem Strom hoher Frequenz erregten Spule wird dann auf dem Niveau $MPKT_H$ liegen, und der effektive Mittelpunkt für die mit dem Strom niedriger Frequenz gespeiste Spule wird auf dem Niveau $MPKT_L$ liegen. Der Geber ist nahe am Prüfgegenstand 2 plaziert, wobei die Verteilung des induzierten Stromes als Funktion der Tiefe die rechts in der Figur 1 gezeigte Form hat. Von großer Bedeutung ist dabei die unterschiedliche Eindringtiefe der Summenströme $\Sigma I$ und die sich daraus ergebenden Konsequenzen.

Die Teilströme sind mit $\Delta I$ bezeichnet und stellen die wirklichen Ströme in der betreffenden Tiefe dar.

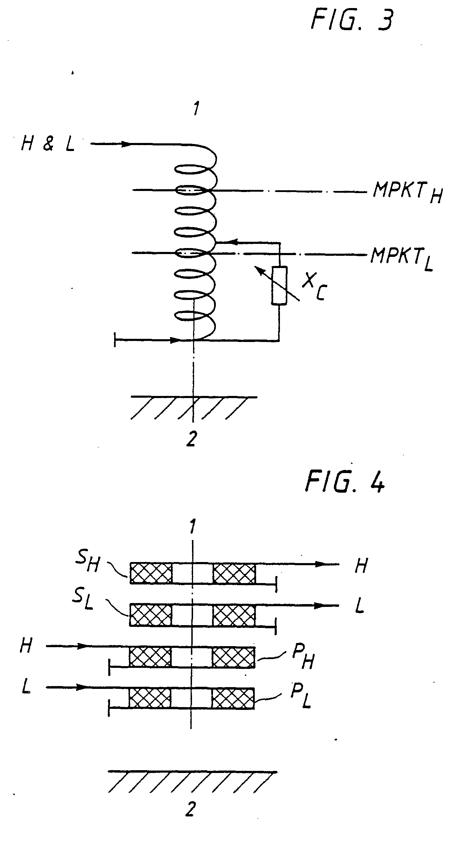

Der Geber kann, wie in Figur 1 gezeigt, beispielsweise aus zwei Spulen bestehen, die mit Strömen, zum Beispiel H und L, gespeist werden. Der Geber kann jedoch auch gemäß Figur 3 und 4 aufgebaut sein. In Figur 4, die einen Querschnitt des Gebers zeigt, entsprechen $P_H$ und $P_L$ den beiden Spulen in Figur 1, während $S_H$ und $S_L$ separate Sekundärspulen sind. Die Buchstaben « P » und « S » stehen hier für « primär » und « sekundär ». Natürlich sind für den Geber neben den hier beschriebenen Ausführungsbeispielen eine Menge anderer Ausführungen denkbar.

Figur 3 zeigt einen Geber, der aus einer Spule und einem Blindwiderstand, zum Beispiel einem Kondensator besteht, der zu einem Teil der Spule parallel geschaltet ist. Die Spule wird mit einem Gemisch aus zwei Strömen mit verschiedenen Frequenzen H und L gespeist. Da der Kondensator $X_C$ für den Strom hoher Frequenz einen kleineren Blindwiderstandswert hat als für den Strom mit der kleineren Frequenz, fließt der hochfrequente Strom zu einem wesentlich größeren Teil über den Kondensator statt über den unteren Teil der Spule als der niederfrequente Strom. Das hat zur Folge, daß die effektiven Mittelpunkte der Geberspulen $MPKT_H$ und $MPKT_L$ nicht mehr zusammenfallen, wie es Figur 3 zeigt. Im Prinzip stimmt also das Verhalten der Geber in Figur 1 und Figur 3 überein.

Macht man den Blindwiderstand $X_C$ veränderlich, so kann der Abstand zwischen den effektiven Mittelpunkten $MPKT_H$ und $MPKT_L$ verändert werden. Wird beispielsweise $X_C$ mit Hilfe eines Steuersignals steuerbar gemacht, so kann die Abstandseinstellung zwischen den effektiven Mittelpunkten der Geberspulen ferngesteuert werden.

Figur 2 zeigt den Querschnitt einer Oszillationsverformung auf der Oberfläche beispielsweise eines Rohlings. In der Figur sind auch die Strompfade der Summenströme eingetragen, und man erkennt, daß diese Strompfade unterhalb der Verformung etwas zusammengedrückt werden. Dabei kann nicht nur die Lage der Strompfade untereinander variieren, sondern auch deren übriges Aussehen kann unterschiedlich sein. Das vielleicht Wichtigste ist jedoch, daß $\Delta DJ_M$ bei tieferen Oszillationsverformungen von $\Delta DJ$ verschieden ist.

In entsprechender Weise, wie gemäß der Erfindung die LO-Abhängigkeit unterdrückt werden kann, können auch die Oszillationsverformungen durch zweckmäßig gewählte Ausgestaltung des Gebers und/oder seiner Speisung unterdrückt werden. Zum Beispiel kann der Unterschied zwischen den effektiven Mittelpunkten einem Mittelwert von $\Delta DJ$ und $\Delta DJ_M$ angepaßt werden. Dadurch wird der unerwünschte Einfluß der Oszillationsverformungen vielleicht nicht ganz aber doch stark genug unterdrückt, um ein wesentlich verbessertes Signal-Störverhältnisses S/N zu erhalten.

Die Unterdrückung kann noch verbessert werden, wenn der effektive Mittelpunkt einer Geberspule in bezug auf seine Natur mehrdimensional ist und im wesentlichen mit der Kontur und Form der Oszillationsverformungen übereinstimmt.

Indem man beispielsweise, wie eben angedeutet, die Form und Lage des effektiven Mittelpunktes (der Geberspule) kontinuierlich variiert und gleichzeitig die Größe S/N beobachtet, ist es möglich, diejenige Form und/oder Lage herauszufinden, die den besten Wert für S/N liefert. Dies kann zum Beispiel mit Hilfe eines Computers geschehen und bei gewissen Anwendungen automatisch erfolgen. Auf diese Weise erhält man auch eine automatische Anpassung und Optimierung hinsichtlich der Oberflächenstruktur des Prüfgegenstandes.

Wie aus dem vorgesagten hervorgeht, basiert die Erfindung darauf, daß der sogenannte effektive Mittelpunkt der Geberspule für unterschiedliche Frequenzen verschieden ist, so daß der Unterschied der Eindringtiefe für die entsprechenden Frequenzen in den Prüfgegenstand im wesentlichen kompensiert wird. Auf diese Weise kann der Einfluß unerwünschter Signale, die durch die unterschiedliche Wirbelstromausbreitung verursacht werden, unterdrückt werden.

Da beispielsweise Risse einen anderen Einfluß auf die Wirbelstromverteilung haben, als zum Beispiel Sicken (Vertiefungen), können von Rissen verursachte Signale erfaßt und hervorgehoben werden, während die von Sicken verursachten Signale unterdrückt werden.

Die Erfindung betrifft natürlich auch Fälle, bei denen Kombinationen von effektiven Mittelpunkten verschiedener Frequenzen so kombiniert werden, daß man die gewünschte Unterdrückung erhält.

In den Figuren sind die effektiven Mittelpunkte der Geberspulen durch punktstrichtierte Niveaus angedeutet, was in vielen Anwendungsfällen ausreicht. Es ist jedoch zu beachten, daß der Mittelpunkt zum Beispiel auch eine dreidimensionale Form haben kann, um dadurch eine mehrdimensionale ungefährliche Veränderung in der Oberflächenstruktur besser kompensieren zu können.

Das Wort « effektiver Mittelpunkt » wurde gewählt, weil eine bessere Bezeichnung fehlt. Da es sich jedoch nicht nur um einen Punkt handelt, könnte auch an den Begriff « Angriffsfläche » oder ein ähnliches Wort gedacht werden.

In Fällen, in denen der senkrecht zur Oberfläche des Prüfgegenstandes gemessene Abstand zwischen Geber und Prüfobjekt relativ klein gegenüber ΔDJ ist, werden — wie aus Figur 1 leicht ersichtlich — die LO-Funktionen im wesentlichen gleich, so daß die durch die unterschiedliche Eindringtiefe ΔDJ verursachten unerwünschten Einflüsse relativ klein sind, auch wenn ΔMPKT gleich Null ist. Leider nimmt jedoch mit zunehmendem LO-Abstand auch die Empfindlichkeit des Gebers gegenüber Fehlstellen usw. stark ab, so daß ein Arbeiten mit großen LO-Abstände in der Praxis kaum in Betracht kommt. Der Bedarf an Gebern mit einer hohen Empfindlichkeit für beispielsweise Risse, d. h. die Notwendigkeit mit verhältnismäßig kleinen LO-Abständen zu arbeiten, macht die vorliegende Erfindung sehr wertvoll. Ein weiterer wichtiger Vorteil der Erfindung ist der größere zulässige LO-Arbeitsbereich, in welchem gearbeitet werden kann.

## Patentansprüche

1. Verfahren zum Prüfen von und/oder zum Messen an elektrisch leitfähigen Prüfgegenständen, zum Beispiel stranggegossenen Rohlingen, zur Feststellung von Veränderungen, zum Beispiel Rissen, in dem Prüfgegenstand oder an der Oberfläche des Prüfgegenstandes, mit einem sich relativ zum Prüfgegenstand bewegenden Geber, der eine oder mehr Spule/Spulen enthält, die mit mindestens zwei Strömen unterschiedlicher Frequenz gespeist wird/werden, wodurch im Prüfgegenstand Ströme induziert werden, deren Eindringtiefen frequenzabhängig sind, wobei die durch die induktive Kopplung zwischen Geber und Prüfgegenstand in der/den Spule/Spulen des Gebers erzeugten Signale erfaßt werden und die Veränderungen dieser Signale als Informationen über Veränderungen in dem Prüfgegenstand oder an seiner Oberfläche ausgewertet werden und wobei als effektiver Mittelpunkt einer Spule die Ebene definiert wird, in der man sich die Spule als eine fiktive Spule räumlich konzentriert vorstellen kann, die dieselbe Wirkung hinsichtlich der magnetischen Kopplung zwischen Geber und Prüfgegenstand hervorruft wie die reale Spule mit ihrer dreidimensionalen Erstreckung, dadurch gekennzeichnet, daß der senkrecht zur Oberfläche des Prüfgegenstandes gemessene gegenseitige Abstand zwischen den effektiven Spulenmittelpunkten (ΔMPKT) für die mindestens zwei Ströme unterschiedlicher Frequenz durch entsprechenden Aufbau und/oder Speisung der Spule/Spulen derart verändert wird, daß unerwünschte Beeinflussungen des Ausgangssignals des Gebers, beispielsweise durch variierende Abstände zwischen dem Geber und dem Prüfgegenstand oder durch Oszillationsverformung am Prüfgegenstand, ganz oder teilweise unterdrückt werden.

2. Verfahren nach Anspruch 1, dadurch gekennzeichnet, daß der senkrecht zur Oberfläche des Prüfgegenstandes gemessene gegenseitige Abstand zwischen den effektiven Spulenmittelpunkten (ΔMPKT) für die mindestens zwei Strömen unterschiedlicher Frequenz im wesentlichen gleich dem Unterschied zwischen den Eindringtiefen (ΔDJ) der von den genannten Strömen im Prüfgegenstand verursachten Wirbelströmen ist.

3. Anordnung zur Durchführung des Verfahren nach Anspruch 1 mit einem Geber, der eine oder mehr Spule/Spulen enthält, die zur Speisung mit mindestens zwei Strömen unterschiedlicher Frequenz bestimmt ist/sind, und mit Mitteln zur Erfassung der durch die induktive Kopplung zwischen Geber und Prüfgegenstand in der/den Spule/Spulen des Gebers erzeugten Signale, dadurch gekennzeichnet, daß der Geber deart aufgebebaut ist und/oder seine Spulen derart speisbar sind, daß der senkrecht zur Oberfläche des Prüfgegenstandes gemessene gegenseitige Abstand zwischen den effektiven Spulenmittelpunkten (ΔMPKT) derart veränderbar ist, daß unerwünschte Beeinflussungen des Ausgangssignals des Gebers, beispielsweise durch variierende Abstände zwischen dem Geber und dem Prüfgegenstand oder durch Oszillationsverformung am Prüfgegenstand, ganz oder teilweise unterdrückt werden.

4. Anordnung nach Anspruch 3, dadurch gekennzeichnet, daß zumindest ein Blindwiderstand, zum Beispiel ein Kondensator, parallel zu einem Teil einer Geberspule, zum Beispiel der unteren Hälfte der Geberspule, geschaltet ist.

5. Anordnung nach einem der Ansprüche 3 oder 4, dadurch gekennzeichnet, daß der senkrecht zur Oberfläche des Prüfgegenstandes gemessene gegenseitige Abstand zwischen den effektiven Spulenmittelpunkten (ΔMPKT) so gewählt ist, daß unerwünschte Beeinflussungen des Ausgangssignals des Gebers durch variierende Abstände zwischen dem Geber und dem Prüfgegenstand oder durch Oszillationsverformung am Prüfgegenstand ganz oder teilweise unterdrückt werden.

6. Anordnung nach einem der Ansprüche 2 bis 5, dadurch gekennzeichnet, daß zumindest eine Spule des Gebers so ausgebildet ist, daß der senkrecht zur Oberfläche des Prüfgegenstandes gemessene Abstand zwischen den effektiven Mittelpunkten der Geberspulen durch Abstandssteuerung, zum Beispiel Fernsteuerung, einstellbar ist.

7. Anordnung nach Anspruch 6, dadurch gekennzeichnet, daß zur Änderung des Abstandes zwischen den effektiven Mittelpunkten der Geberspulen ein einstellbarer Blindwiderstand, zum Beispiel ein verstellbarer Kondensator ($X_C$) vorhanden ist.

8. Anordnung nach einem der Ansprüche 2 bis 7, dadurch gekennzeichnet, daß der senkrecht zur Oberfläche des Prüfgegenstandes gemessene gegenseitigen Abstand zwischen den effektiven Spulenmittelpunkten (ΔMPKT) automatisch als Funktion der Oberflächenstruktur der Prüfgegenstandes, zum Beispiel durch einen Computer, veränderbar oder justierbar ist.

## Claims

1. Method for testing of and/or measuring at electrically conductive test objects, such as extruded billets, to detect variations, such as cracks, in the test object or on the surface of the test object by means of a transducer which moves relative to the test object and comprises one or several coil/coils, which is/are supplied with at least two currents of different frequencies, which cause the induction of currents in the test object having different, frequency-dependent penetration depths, whereby the signals which are generated in the coil/coils of the transducer as a result of the inductive coupling between the transducer and the test object are sensed and the variations of these signals are processed to produce information on variations in the test object or on its surface, and whereby that plane is defined as effective mid-point of a coil in which plane lies an spatially concentrated imaginary coil, which exhibits the same effects with respect to the magnetic coupling between the transducer and the test object as the physical three-dimensional coil, characterized in that the mutual distance between the effective mid-points (ΔMPKT) for the at least two currents of different frequencies, measured perpendicular to the surface of the test object, is changed by a corresponding design and/or supply of the coil/coils in such a way that unwanted influences on the output signals of the transducer, which, for example, originate from varying distances between transducer and test object or from oscillation marks on the test object are completely or partially suppressed.

2. Method according to claim 1, characterized in that the mutual distance between the effective mid-points (ΔMPKT) for the at least two currents of different frequencies, measured perpendicular to the surface of the test object, is substantially equal to the difference between the penetration depths (ΔDJ) of the eddy currents generated in the test object by said currents through the coil/coils.

3. Device for carrying out the method according to claim 1 with a transducer comprising one or several coil/coils which are provided to be supplied with at least two currents of different frequencies and with means for detection of the signals generated in the coil/coils of the transducer due to the inductive coupling between the transducer and the test object, characterized in that the transducer is designed such and/or its coils are adapted to be supplied such that the mutual distance between the effective midpoints

(ΔMPKT), measured perpendicular to the surface of the test object, is adapted to vary such that unwanted influences on the output signals of the transducer, which, for example, originate from varying distances between transducer and test object or from oscillation marks on the test object are completely or partially suppressed.

4. Device according to claim 3, characterized in that at least one reactance, for example a capacitor, is connected in parallel to part of a transducer coil, for example to the lower half of the transducer coil.

5. Device according to any of claims 3 or 4, characterized in that the mutual distance between the effective mid-points (ΔMPKT), measured perpendicular to the surface of the test object, is selected such that unwanted influences on the output signals of the transducer, which, for example, originate from varying distances between transducer and test object or from oscillation marks on the test object are completely or partially suppressed.

6. Device according to any of claims 2 to 5, characterized in that at least one coil of the transducer is designed in such a way that the distance between the effective mid-points of the transducer coils is adjustable by means of distance control, for example remote control.

7. Device according to claim 6, characterized in that an adjustable reactance, for example in adjustable capacitor ($X_C$), is provided for varying the distance between the effective mid-points of the transducer coils.

8. Device according to any of claims 2 to 7, characterized in that the mutual distance between the effective mid-points (ΔMPKT) of the coils, measured perpendicular to the surface of the test object, can be varied or adjusted automatically, for example by a computer, as a function of the surface structure of the test object.

## Revendications

1. Procédé pour effectuer un contrôle et/ou une mesure sur des objets électriquement conducteurs à tester, par exemple des ébauches formées par coulée continue, la détermination de modifications, par exemple de fissures, dans l'objet à tester ou sur la surface de cet objet à tester, avec un transmetteur qui se déplace par rapport à l'objet à tester et qui contient une ou plusieurs bobines, alimentée(s) par au moins deux courants possédant des fréquences différentes, ce qui induit dans l'objet à tester des courants, dont les profondeurs de pénétration dépendent de la fréquence, et selon lequel on détecte les signaux produits par le couplage inductif entre le transmetteur de l'objet à tester dans la/les bobines du transmetteur et on évalue les modifications de ces signaux en tant qu'informations concernant des modifications dans l'objet à tester ou au niveau de sa surface, et selon lequel on définit comme centre effectif d'une bobine le plan, dans lequel on se représente la bobine selon une configuration concentrée dans l'espace en tant que bobine fictive, qui fournit le même effet du point de vue du couplage magnétique entre le transmetteur et l'objet à tester, que la bobine réelle possédant son étendue tridimensionnelle, caractérisé par le fait qu'on modifie la distance réciproque (ΔMPKT), mesurée perpendiculairement à la surface de l'objet à tester, entre les centres effectifs des bobines pour les courants, prévus au moins au nombre de deux, possédant des fréquences différentes, grâce à un agencement correspondant et/ou une alimentation correspondante de la ou des bobines de manière à supprimer complètement ou partiellement des influences indésirables du signal de sortie du transmetteur, dues par exemple à des distances, qui varient, entre le transmetteur et l'objet à tester ou à une déformation par oscillations dans l'objet à tester.

2. Procédé suivant la revendication 1, caractérisé par le fait que la distance réciproque (ΔMPKT), mesurée perpendiculairement à la surface de l'objet à tester, entre les centres effectifs des bobines pour les courants, prévus au moins au nombre de deux, possédant des fréquences différentes, est sensiblement égale à la différence entre les profondeurs de pénétration (ΔDJ) des courants de Foucault provoqués par lesdits courants dans l'objet à tester.

3. Dispositif pour la mise en œuvre du procédé suivant la revendication 1, comportant un transmetteur, qui contient une ou plusieurs bobines destinée(s) à être alimentée(s) par au moins deux courants possédant des fréquences différentes, et des moyens pour détecter les signaux produits par le couplage inductif entre le transmetteur et l'objet à tester dans la ou les bobines du transmetteur, caractérisé par le fait que le transmetteur est constitué et/ou ses bobines peuvent être alimentées de manière à modifier la distance réciproque (ΔMPKT), mesurée perpendiculairement à la surface de l'objet à tester, entre les centres effectifs des bobines pour éliminer totalement ou partiellement des influences indésirables du signal de sortie du transmetteur, dues par exemple à des distances, qui varient, entre le transmetteur et l'objet à tester ou à une déformation par oscillations dans l'objet à tester.

4. Dispositif suivant la revendication 3, caractérisé par le fait qu'au moins une réactance, par exemple un condensateur, est branchée en parallèle avec une partie d'une bobine du transmetteur, par exemple la moitié inférieure de la bobine du transmetteur.

5. Dispositif suivant l'une des revendications 3 ou 4, caractérisé par le fait qu'on choisit la distance réciproque (ΔMPKT), mesurée perpendiculairement à la surface de l'objet à tester, entre les centres effectifs des bobines de manière à éliminer complètement ou partiellement des influences indésirables du signal de sortie du transmetteur, produites par des distances, qui varient, entre le transmetteur et l'objet à tester ou par une déformation d'oscillations dans l'objet à tester.

6. Dispositif suivant l'une des revendications 2 à 5, caractérisé par le fait qu'au moins une bobine du transmetteur est agencée de telle sorte que la distance, mesurée perpendiculairement à la surface de l'objet à tester, entre les centres effectifs des bobines du transmetteur, peut être réglée au moyen d'une commande de cette distance, par exemple une télécommande.

7. Dispositif suivant la revendication 6, caractérisé par le fait que pour modifier la distance entre les centres effectifs des bobines du transmetteur, il est prévu une réactance réglable, par exemple un condensateur ($X_C$) réglable.

8. Dispositif suivant l'une des revendications 2 à 7, caractérisé par le fait que la distance réciproque (ΔMPKT), mesurée perpendiculairement à la surface de l'objet à tester, entre les centres effectifs des bobines, peut être modifiée ou ajustée d'une manière automatique en fonction de la structure superficielle de l'objet à tester, par exemple à l'aide d'un ordinateur.

FIG. 1

FIG. 2

FIG. 3

FIG. 4